# EUROPEAN PATENT SPECIFICATION

(11) **EP 3 861 220 B1**
(45) Date of publication and mention of the grant of the patent: **25.06.2025**
(21) Application number: 19786876.3
(22) Date of filing: 01.10.2019
(51) Int. Cl.: F16B 13/08, F16B 5/02, E04F 11/18, E04B 1/00

(54) **ELASTIC FIXING SYSTEM OF ONE OR MORE PANELLINGS TO A SUPPORT STRUCTURE, IN PARTICULAR FOR THE MAKING AND INSTALLATION OF BALUSTRADES, PARAPETS, BARRIERS OR SIMILAR ACHITECTURAL ELEMENTS**
ELASTISCHES BEFESTIGUNGSSYSTEM VON EINER ODER MEHREREN VERKLEIDUNGSTAFELN AN EINER TRAGSTRUKTUR, INSBESONDERE ZUR HERSTELLUNG UND MONTAGE VON BALUSTRADEN, BRÜSTUNGEN, BARRIEREN ODER ÄHNLICHEN ARCHITEKTONISCHEN ELEMENTEN
SYSTÈME DE FIXATION ÉLASTIQUE D'UN OU DE PLUSIEURS PANNEAUX À UNE STRUCTURE DE SUPPORT, EN PARTICULIER POUR LA FABRICATION ET L'INSTALLATION DE BALUSTRADES, PARAPETS, BARRIÈRES OU ÉLÉMENTS ARCHITECTURAUX SIMILAIRES

(30) Priority: 04.10.2018 IT 201800009173
(43) Date of publication of application: 11.08.2021
(73) Proprietor: Faraone S.R.L., 64018 Tortoreto (IT)
(72) Inventor: HOXHAJ, Bleron, 56127 Pisa (IT); PAOLINI, Matteo, 64010 Controguerra (IT); LEVANTE, Fabio, 73041 Carmiano (IT)
(74) Representative: Mar.Bre S.r.l.
(86) International application number: PCT/IB2019/058326
(87) International publication number: WO 2020/070633

(56) References cited:
- EP-A1- 3 321 519
- WO-A1-2010/091519
- DE-U1- 202012 009 609
- US-B2- 7 416 362

## Description

The object of the present invention is a boss fixing system of a panelling to a support structure, in particular for the making and installation of balustrades, parapets, barriers or similar architectural elements.

More in detail, the present invention relates to the fixing of sheet-like elements, in particular made of glass or the like, to a support structure, so as to define a structure for delimiting or containing people, animals and/or things.

Normally, said support structure may comprise a building component such as terraces, floors, balconies, or in general any walkable support surface arranged substantially horizontally.

The invention, therefore, falls within the building field, particularly in the sector of architecture.

Of course, nothing prevents the application of the invention to be extended also to fields different from the building one, such as for example nautical.

It is known that said delimiting or containment structures must meet and comply with specific safety standards, in particular relating to the loads they can be subjected to, so as to guarantee the protection and safety of persons or property. For example, said containment structures must be able to oppose and withstand an impact by a semi-rigid body (in accordance with UNI EN12600), i.e., they must withstand an impact with things, animals, people, provided and imparted in the most heavy position.

Said structures, therefore, must have the capacity to withstand, but without causing damage or injury, sudden and accidental impacts by things, animals or people. There are different mounting and fixing solutions, which secure the sheet-like elements to a building component.

For example, metal profiles are known, which can be anchored to the building component, adapted to act as a seat and support for said elements, retaining them fixed and stable even under the action of a load.

Said profiles are able to absorb and withstand the load, keeping the sheet-like element substantially unloaded.

Such solution allows meeting the safety standards, but at the same time increases the weight of the containment structure and alters its visual impact.

In particular, said profiles, due to their dimensions and their non-transparency that makes them very visible, change and "dirty" the line and the design of the containment structure, negatively affecting the aesthetic impression created.

In fact, said containment structures must be able to fully carry out their safety function and at the same time maintain satisfactory and pleasant aesthetic standards, so as to allow their use also in valuable architectural contexts.

To overcome such drawbacks, fixing means have been made, capable of locking and anchoring the plate-like elements directly to the building component; in general, said sheet-like element is installed to the shoulder of said building component.

Said fixing means, here called "*boss constraint*" or "*constraint points*", allow improving the visual impact by eliminating the use of metal profiles and provide a constraint means capable of guaranteeing the safety conditions.

The boss constraint, however, limits the resistance of the containment structure to an accidental impact, such as for example a soft-body impact.

In fact, said boss constraint, being rigid, does not support the deformation of the sheet-like element, creating the conditions for the breaking of the same.

We may consider, for example, a person who hits a generic balustrade.

The plate-like element reacts to the load by bending, in particular in the upper part subject to the load, while the point constraint reacts rigidly, preventing the lower part of the plate-like element from bending (the lower part of the plate-like element is that constrained to the building element).

The sheet-like element, therefore, cannot fully and freely support the deformation which it is subjected to; a criticality is thus generated capable of compromising the structural integrity through breakage and/or fracture.

To obviate such drawback, point constraints provided with elastic means, such as for example springs, have been made so as to allow partial yielding along the axis orthogonal to the plane defined by the plate-like element.

Therefore, said solution provides for a translation of the point constraint along its longitudinal axis, that is, orthogonal to the sheet-like element, in order to offer greater freedom of movement to the lower part of the same sheet-like element. However, the use of said elastic means has not definitively resolved the problem of the resistance to the impact by semi-rigid body of the containment structure.

In fact, said yielding of the point constraint cannot allow and support the various possible movements of the sheet-like element, which therefore, in the event of an impact, remains strongly stressed in the zone neighbouring the point constraint. Document EP3321519 A1 discloses a solution of the prior art, and more in particular a device for connecting two components, which comprises a clamping element, which is guided axially displaceably on a shank of a screw and has an outer conical surface, and a radially expandable clamping ring having an inner conical surface. The clamping element is inserted into the clamping ring in such a way that the outer conical surface of the clamping element abuts the inner conical surface of the clamping ring.

The main object of the present invention is to obviate the drawbacks set forth above by providing one or more bosses for the fixing of panels to a support structure, in particular for the making and installation of balustrades, parapets, barriers or similar architectural elements, capable of at least elastically supporting the movements of said panelling when stressed by one or more loads.

A further object of the present invention, at least for one or more executive variants, is to provide a boss system that facilitates the fixing of at least one panel to a support structure.

A further object of the present invention, at least for one or more executive variants, is to provide a boss system that reduces the size and dimensions of the boss.

A further object of the present invention, at least for one or more executive variants, is to provide a boss system that limits the number of components necessary for the installation and operation of the boss.

A further object of the present invention, at least for one or more executive variants, is to provide a boss system capable of providing a cushioning effect to dissipate the impact energy transmitted by a force.

This and other objects, which shall appear clear hereinafter, are achieved with an elastic fixing system of one or more panels to a support structure, illustrated in the following description and in the annexed claims that constitute an integral part of the same description.

Further features of the present invention shall be better highlighted by the following description of a preferred embodiment, in accordance with the patent claims and illustrated, purely by way of a non-limiting example, in the annexed drawing tables, in which:
- Figs. 1a, b, c and d show different views of a possible embodiment of a central bush of the boss according to the present invention;
- Figs. 2a, b, c and d show different views of a possible embodiment of an eccentric bush of the boss according to the present invention;
- Figs. 3a, b, c and d show different views of a possible embodiment of a container body comprised in the boss according to the present invention;
- Figs. 4a, b, c and d show different views of a possible embodiment of a sliding ring nut of the boss according to the present invention;
- Figs. 5a, b, c and d show different views of a possible embodiment of the elastically yielding body of the boss according to the present invention;
- Figs. 6a, b and c show different views of the yielding body installed on said sliding ring nut;
- Figs. 7a and b show different views of the container body of Figs. 3 coupled with the central bush of Figs. 1;
- Figs. 8a, b and c show different views of the container body of Figs. 3 coupled with the sliding ring nut of Figs. 4;
- Fig. 9 shows an exploded view of the fixing system according to the present invention in accordance with a possible executive variant;
- Fig. 10 shows a section view of the fixing system according to the present invention in accordance with a possible executive variant in rest position;
- Fig. 11 shows a section view of the fixing system of Fig. 10 with elements rotated and translated following a mechanical stress exerted on the plate-like element;
- Fig. 12 shows schematically and with symbolic functional elements the kinematic mechanism that constitutes the essential part of the fixing system according to the present invention.

The features of the invention are now described using the references in the figures. It should be noted, also, that any dimensional and spatial term (such as "lower", "upper" , "inner", "outer", "front", "rear", "vertical", "horizontal" and the like) refers, unless otherwise indicated, to the position according to which the object of the invention is shown in the drawings, which does not necessarily coincide with the position of the same in operating conditions.

With the purpose of highlighting some features instead of others, not necessarily what described in the annexed drawings is perfectly to scale.

By rest position it is meant the position maintained by the elements of the invention when not subjected to sudden external stresses.

The term balustrade, without any limiting intent, hereinafter is to be understood as any type of infrastructure, of any material and shape, adapted to define a delimiting and/or containment structure for people and/or animals and/or things (balustrades, parapets, barriers or similar architectural elements).

Without any limiting intent, for description simplicity, hereinafter the term panel is to be understood as any substantially plate-shaped structural element adapted to define a balustrade or a parapet, such as for example panellings, polycarbonate sheets, glass sheets, wood, etc.

As clearly shown in the accompanying figures, 1 indicates, as a whole, the fixing and connection system of one or more panels 2 to a support structure 8 (hereinafter structure 8) according to the present invention.

In general, said structure 8 may consist of a building element such as terraces, floors, balconies or in general any walkable support surface arranged substantially horizontally, fully or partly made of masonry and/or metal carpentry and/or wood or other.

Said fixing system 1 comprises at least one elastic boss 3, 4 adapted to an elastically yielding anchoring of the panel 2 to the structure 8, for example to a shoulder 80 thereof lying substantially vertical.

Each of the two bosses 3, 4 provides elastically yielding locking means adapted to allow a rotation and possibly also a translation of the panel 2 with respect to said shoulder 80.

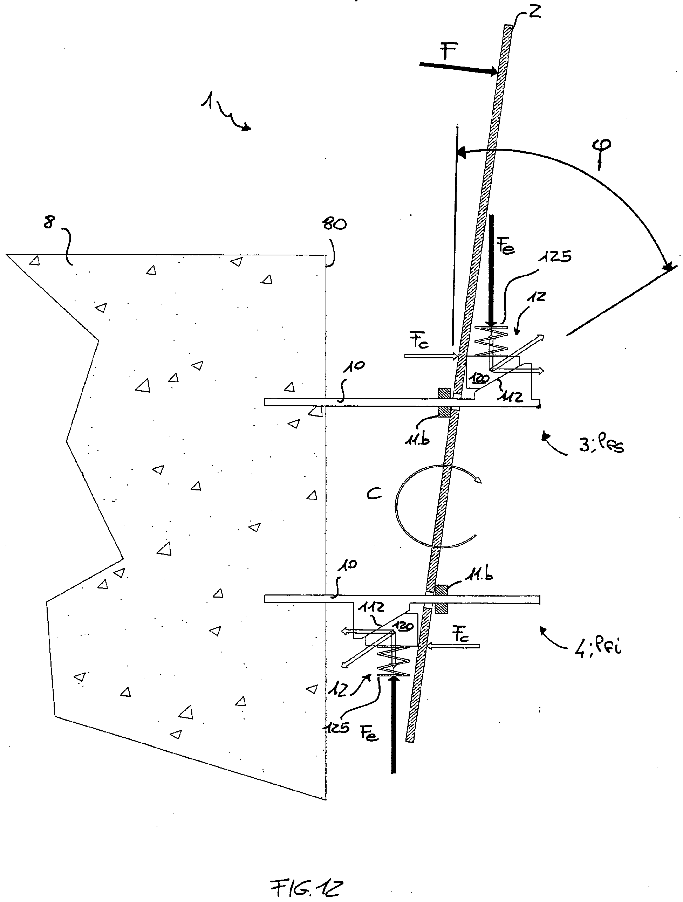

According to the invention, with reference to Fig. 12, each of said bosses 3, 4 is anchored to the shoulder 80 by means of a shank 10 and provides an elastically yielding body 12, in turn comprising:
- at least one sliding element 120 whereon said panel 2 can press;
- at least one sliding surface 112, whereon said sliding element 120 is capable of sliding, irremovably constrained to said shank 10 and inclined with respect to the lying plane of the panel 2 at rest by an angle φ, preferably of about 45°, and however such as to allow the retrograde motion of the sliding element 120 sliding on the sliding surface 112;
- elastic opposing means 125, positioned and constrained so as to be able to exert an elastic force Fe that insists on said sliding element 120 so as to press it on said sliding surface 112;
said elastically yielding body, by means of said elements assembly 120, 112, 125, being able to oppose yields due to a load F substantially orthogonal to the lying plane of the panel 2 with an elastic reaction force Fe substantially parallel to the lying plane of the panel 2.

With reference to the sliding surface 112 it should be noted that by "irremovably constrained" it is to be understood that said sliding surface 112, once installed and fixed on said shank 10, is fixed and stable so as to act as a guide and stop means for the movement of the sliding element 120.

However, it should be understood that said sliding surface 112 may be unmounted and removed from the shank 10.

What has been said may be substantially extended also to the fixing of the shank 10 to the shoulder 80.

In conclusion, said sliding element 120, following an impact force F exerted thereon by the panel 2, is pushed to slide along said sliding surface 112 and to press against said elastic opposing means 125 that oppose said force F with an elastic reaction force Fe that is substantially orthogonal to the same force F. What has been said applies to both bosses 3 and 4 that are capable of opposing also the torque C (shown in the figure by the torque of forces Fc) in the same way. Said elastic opposing means 125, symbolized in the figure by spiral springs, may be of any type such as O-rings or other compression and pulling elastic elements. The elastic boss 3, 4 is now described in accordance with a possible and preferred embodiment variant of the present invention.

According to such variant, the fixing system 1 to the structure 8 comprises:
- at least one shank 10, irremovably fixed to the same structure 8, provided, integrally or partially, with an external thread 100;
- a central bush 20, provided with coupling/jointing means 200, whereon an eccentric bush 21 is installed, and installed in a suitable hole 220 made on the panel 2;
- at least one container body 30.a, preferably provided with closing and finishing means, wherein there may be seated:
   - at least said elastically yielding body 12 comprising at least one sliding ring nut 11.a screwable along said shank 10 and provided, integrally or partially, with a sliding surface 112, at least said sliding element 120, said elastic opposing means 125, said at least one sliding element 120 being suitably shaped in order to be able to cooperate with said sliding ring nut 11.a and slide on said sliding surface 112;
   - an optional washer 13 adapted to improve adherence between the inner surface of said container body 30.a and said elastically yielding body 12;
- at least one container body 30.b, preferably provided with closing and finishing means, wherein there may be seated:
   - at least one clamping ring nut 11.b screwable along said shank 10, which acts as an abutment and stop for the locking of the said panel 2;
   - an optional washer 13 adapted to improve adherence between the inner surface of said container body 30.b and said clamping ring nut 11.b.

With the numerals 11.a and 11.b and with 30.a and 30.b, functionally different elements have been indicated, respectively, with different specific structural features adapted to carry out different tasks, in particular:
- 11.a indicates the sliding ring nut that cooperates with the elastically yielding body 12;
- 11.b indicates the clamping ring that acts as an abutment and a stop for the locking of the said panel 2;
- 30.a indicates the container body, herein referred to as sliding, which houses at least the elastically yielding body 12;
- 30.b indicates the container body, herein referred to as abutment, which houses at least said clamping ring nut 11.b.

Said functional elements may advantageously coincide by shapes and materials so as to maintain a reduced number of components, i.e.:
- the same component 11 may be used as a sliding ring nut 11.a and/or as a clamping ring nut 11.b;
- the same component 30 may be used as a sliding container body 30.a and/or as a stop container body 30.b.
30.a and 30.b, each therefore provide specific structural features compatible with the functions they must carry out, but nothing prevents the use of a same container body 30 substantially comprising the structural features of both so as to limit the number of components necessary to the invention, or that it may differentiate for secondary constructional details, although still functionally equivalent; for example, the threads 320 may be replaced by alternative fixing means such as joint-wise couplings or the like.

Similarly, also 11.a and 11.b each provide specific structural features compatible with the functions they have to carry out, but nothing prevents the same component 11 to substantially comprise the structural features of both.

For the sake of clarity, therefore, the suffixes ".a" and ".b" distinguish between two components that may carry out alternative and completely different functions while being usefully of identical shape.

Said elastic boss 3, 4 is characterised in that the kinematic chain consisting of the elements container body 30.a, sliding ring nut 11.a, elastically yielding body 12, shank 10, carry out an elastic coupling capable of allowing elastic translation and/or rotation movements of the panel 2, with respect to the shoulder 80, when this, subject to an accidental and impulsive load represented by a force F, transmits a torque C and an applied force Fa parallel to the longitudinal axis x-x of the same boss 3, 4.

Said applied force Fa comprises a pulling Ft or pressing Fp force, where by pulling force Ft it is meant a force tending to move the panel 2 away from the structure 8 and by pressing Fp a force tending to bring the panel 2 close to the structure 8.

Said elastic coupling, therefore, allows the panel 2 to yield elastically in response to at least some types of impacts it may receive reducing their destructive or traumatic effect against the persons who hit it and/or protecting the same panel 2 from possible breakages.

Said elastic coupling is capable of transforming and converting the longitudinal stress (axial along the shank 10) generated by the said pulling Ft or pressing Fp force to a transverse stress (radial with respect to the shank 10) Fr, said transverse (radial) stress Fr being absorbed and cushioned by the elastic deformation undergone by said elastic coupling.

Said elastic coupling, therefore, by attenuating and dissipating said applied force Fa, deforms accumulating elastic energy.

Said elastic energy, once the stress and the effect of the said applied force Fa is over, allows the elastic coupling to return to the rest position, bringing the panel 2 back to the original position.

Optional closing and finishing means are possible, which, besides preserving the aesthetics of the boss, also provide protection from dirt, dust, atmospheric agents or the like for the components making said boss 3, 4.

Such closing means may provide different solutions according to the position of the container body 30, 30.a, 30.b whereon they are installed, for example they can comprise:
- a housing 40, if they cooperate with a container body 30, 30.a, 30.b, external to panel 2, where said housing 40 is installable, by screwing, along said threaded portion 320, or joint, to the said container body 30.a;
- a plurality of finishing elements, if it cooperates with a container body 30, 30.a, 30.b inside the panel 2.

Said plurality of finishing elements comprises a first tubular element 51 fixed, by screwing, along said threaded portion 320, or interlocking, to said container body 30, 30.a, 30b, a second tubular element 52 insertable, at least partially, inside said first tubular element 51, a helical spring 53 arranged between said second tubular element 52 and said container body 30, 30.a, 30.b.

Said spring insists on the second tubular element 52 and on a shoulder 322 obtained on said container body 30, 30.a, 30.b.

During the installation step, said plurality of finishing elements allows, thanks to the thrust provided by said helical spring 53, bringing the second tubular element 52 in contact with the shoulder 80 of the building element 8, guaranteeing the desired aesthetic finishing and protection of the components.

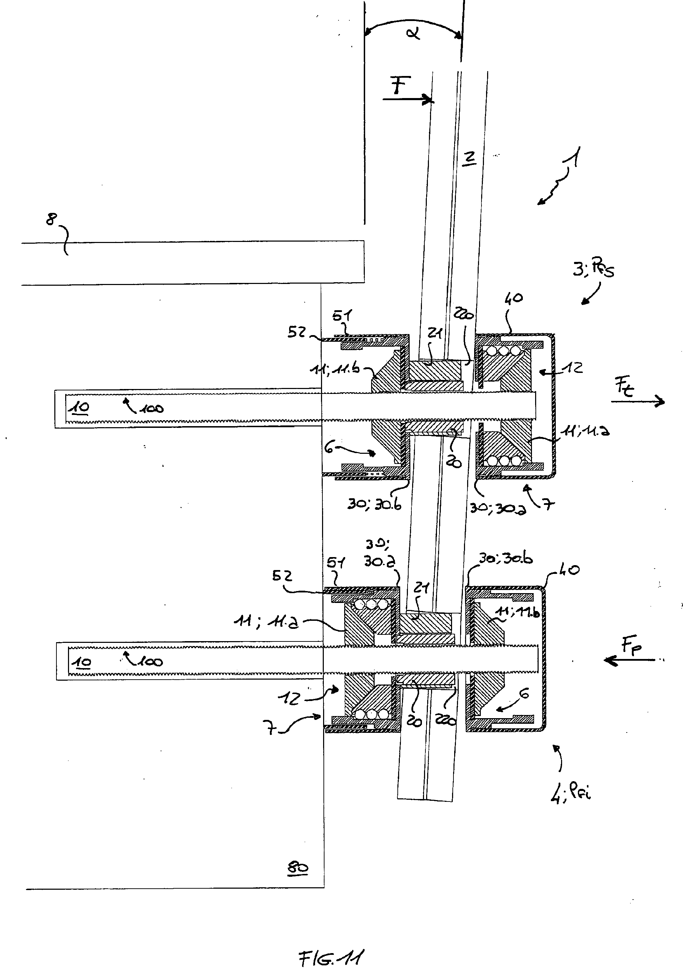

Moreover, in the event of impact and consequent rotation of the panel 2, said helical spring 53 allows said second tubular element 52 to slide more inside said first tubular element 51, so as to support the deformation movement of the boss in response to the thrust of the said panel 2 (Fig. 11).

Alternatively, said plurality of finishing elements may be replaced by a sleeve, couplable by screwing or jointing to said container body 30, 30.a, 30.b, made of yielding material.

Advantageously, as previously stated and as illustrated in the figures, said container bodies 30.a and 30.b may respectively provide a single container body 30, with the same shapes and materials, so that said container body 30 may fulfil and meet two different needs.

With reference to the accompanying figures, a possible embodiment variant of the boss according to the present invention will now be described by way of a non-limiting example.

The boss will be distinguished here with the numerals 3 and 4 to indicate when used as an upper 3 and lower 4 boss, said bosses being substantially different in the arrangement of the means and the elements composing them.

The boss 3 is capable of responding elastically to a pulling force Ft in addition to a torque C, while the boss 4 is capable of responding elastically to a pressing force Fp in addition to a torque C.

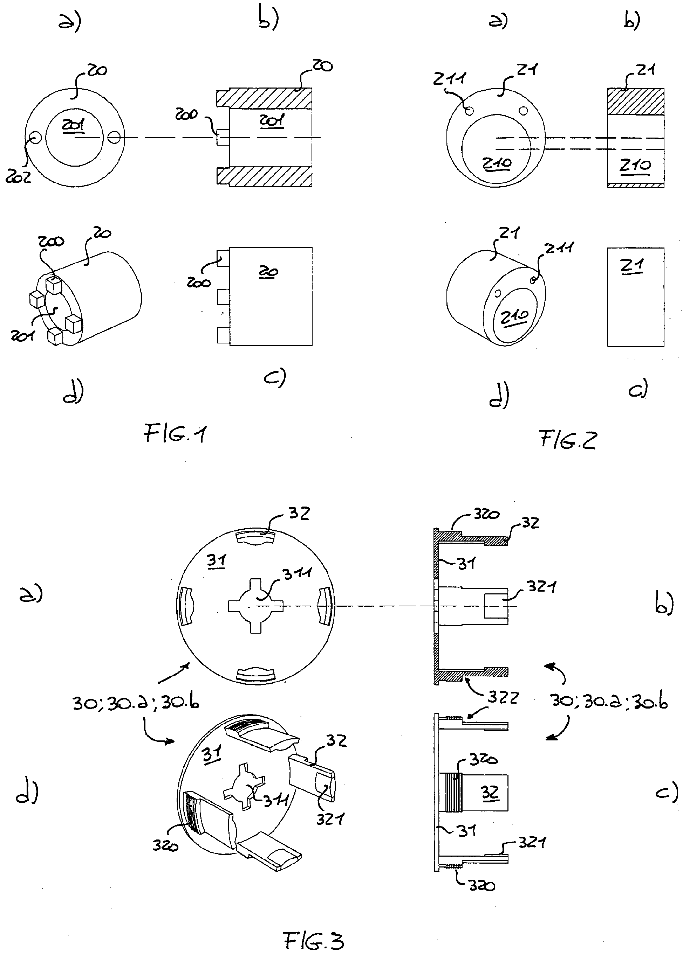

Figs. 1a, 1b, 1c and 1d show a central bush 20 provided with a through hole 201, for the passage of the shank 10, and with suitable coupling/jointing means 200, substantially a plurality of suitably shaped projections.

Said central bush 20 may advantageously be provided with at least two holes 202 that allow, as will be illustrated below, adjusting its position along said shank 10 from the outside.

Figs. 2a, 2b, 2c and 2d illustrate an eccentric bush 21 provided with a through hole 210 adapted to receive and couple with said central bush 20.

Said through hole 210 is not concentric with respect to the longitudinal axis of said eccentric bush 21; this facilitates the mounting and adjustment operation of the various elements during the panel installation step 2.

Said eccentric bush 21 may advantageously be provided with at least two holes 211 that allow, as will be illustrated below, adjusting its position along said shank 10 from the outside.

Nothing prevents, in accordance with a possible executive variant, to make said central bush 20 and eccentric bush 21 in a single element 20-21.

Figs. 3a, 3b, 3c and 3d show a possible executive variant of a container body 30, usable both as a sliding container body 30.a and as a stop container body 30.b, i.e., as mentioned, the variant described herein of said container body 30 combines and incorporates the peculiar structural features of both of said container bodies 30.a and 30.b.

Said container body 30 is defined by a base wall 31 wherefrom a plurality of protrusions 32 develop and extend, in the form of a side wall, adapted to define a cavity that receives said elastic coupling (i.e., said elastically yielding body 12), in the case of the container body 30.a, or said clamping ring nut 11.b, in the case of the container body 30.b.

Said projections 32 are arranged in the proximity of the outer perimeter of said base wall 31.

Each of said projections 32:
- it is externally provided, integrally or partially, with a threaded portion 320 whereon said closing and finishing means is screwed and positioned (i.e., said housing 40 or said first tubular element 51);
- it is externally provided, integrally or partially, with a shoulder 322 acting as an abutment for said second tubular element 52;
- it is internally provided with a prominence 321, preferably a convex portion 321, cooperating with said sliding ring nut 11.a.

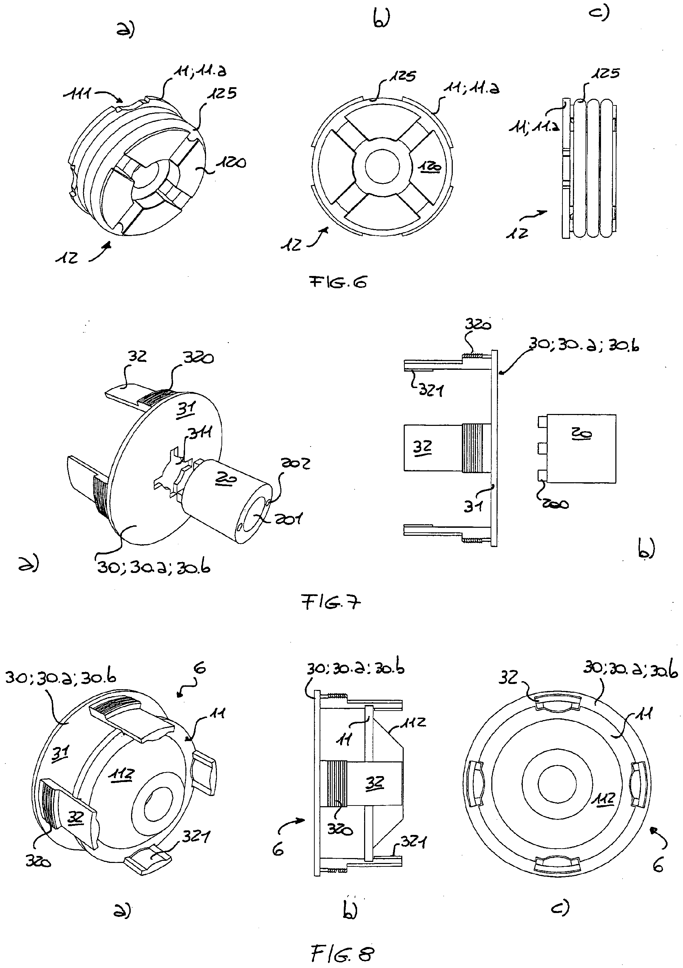

The base wall 31 is provided with a suitably shaped hole 311 in order to releasably couple with the coupling/jointing means 200 arranged on said central bush 20 (Figs. 7a and 7b).

Such releasable coupling, substantially defined by a shape coupling 311-200, allows joining said container body 30, 30.a, 30.b with said central bush 20.

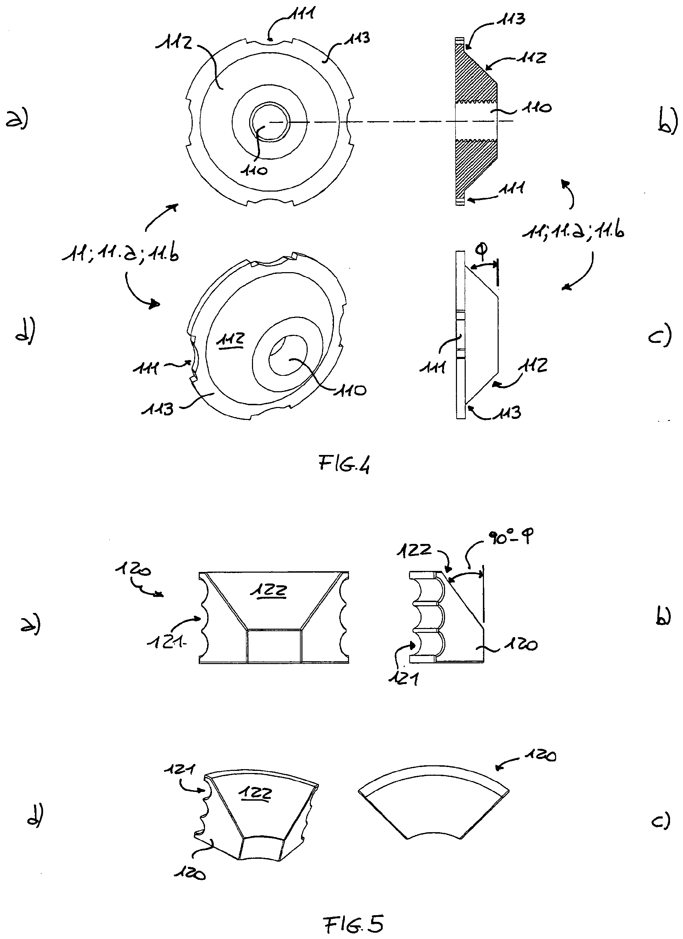

Figs. 4a, 4b, 4c and 4d show a possible executive variant of a sliding ring nut 11.a provided with a threaded through hole 110 and with a plurality of recesses (or seats) 111 adapted to couple, preferably by shape coupling 111-321, with the respective convex portion 321 of the projections 32 of the container body 30, 30.a (Figs. 8a, 8b and 8c).

Preferably, there may be provided as many recesses 111 as the projections 32. Such shape coupling 111-321 allows said container body 30, 30.a to slide on said sliding ring nut 11.a, in particular enables each convex portion 321 to slide on the respective recess 111.

The stop ring nut 11.b may advantageously provide a plurality of similar recesses, adapted to couple, preferably by shape, with the convex portion 321 of the projections 32 of the container body 30, 30.b.

Such shape coupling 111-321 allows, by acting on said container body 30; 30.a; 30.b, screwing/unscrewing said sliding ring nut 11.a and/or said stop ring nut 11.b along said shank 10.

Said sliding ring nut 11.a is provided with a guiding and sliding surface 112 whereon said elastically yielding body 12 moves, so as to provide a static and fixed support to the movement of said elastic coupling, and of an abutment surface 113 that acts as an end stop and stop for the movement of said body 12.

Said guide surface 112, inclined of the said angle φ, comprises, integrally or partially, at least one portion of an inclined plane; preferably said guide surface 112 comprises at least one portion of a surface inclined relative to the symmetry axis of the ring nut 11.a, preferably convex truncated cone, truncated-pyramid or the like.

Figs. 5a, 5b, 5c, 5d, 6a, 6b, 6c and 6d show a possible executive variant of said elastically yielding body 12.

Said body 12 comprises a sliding ring nut 11.a, a plurality of sliding elements 120 maintained in position and joined by one or more elastic opposing means 125, such as for example O-rings, elastic gaskets or the like, also comprised in said elastically yielding body 12.

Each sliding element 120 is provided with one or more grooves 121 adapted to house said elastic opposing means 125, and with at least one gliding surface 122, advantageously comprising an inclined plane portion, capable of moving along the guide and sliding surface 112 of said sliding ring nut 11.a.

Between said guiding surface 112, which is fixed, and said gliding surface 122, which is capable of moving, a sliding interface is obtained that allows the sliding element 120 to slide on the sliding ring nut 11.a; preferably such sliding interface is made by rectilinear surfaces such as to substantially define an inclined plane.

The abutment surface 113 acts as an end stop for the sliding of the sliding element 120, preventing it from translating too much hitting the inner walls of the said container body 30.a.

According to the invention said sliding interface is inclined with respect to the longitudinal axis of said boss by the said angle φ, which allows a retrograde motion, so as to allow, by means of said sliding of the parts, the transformation of the longitudinal (axial) stress generated by said pulling Ft or pressing Fp force into a transverse (radial) stress Fr.

Said radial stress Fr is substantially absorbed and cushioned by the elastic deformation undergone by said elastic means 125 and by the sliding of said sliding elements 120 along said guide surface 112.

Nothing prevents, in accordance with possible embodiments, from making said elastically yielding body 12 in a single element capable of elastically deforming and suitably shaped in order to be able to cooperate with said sliding ring nut 11.a and slide on said guide surface 112.

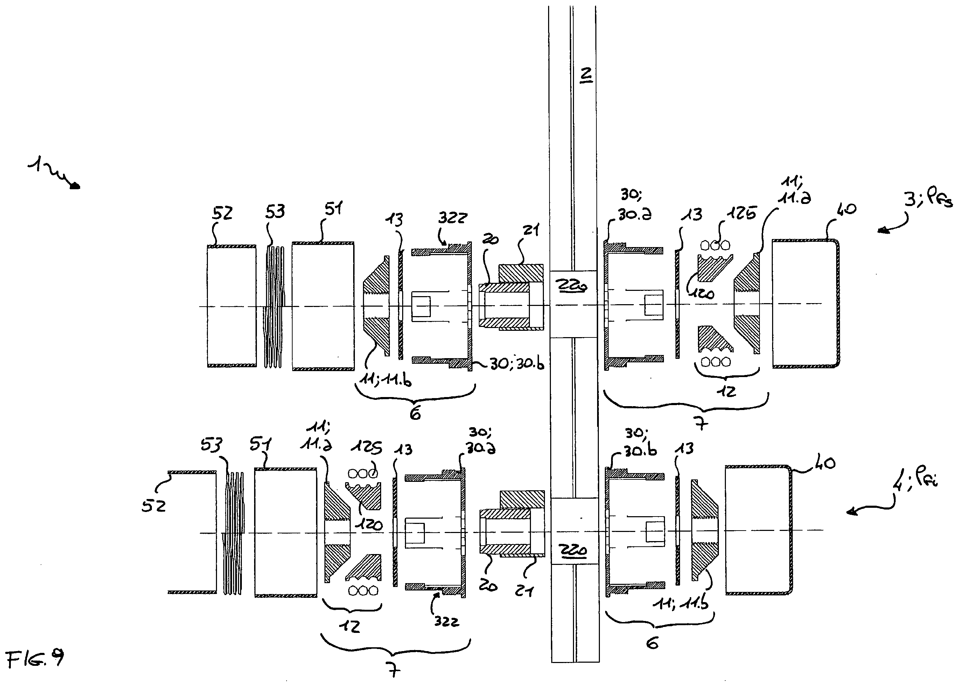

The boss according to the present invention, see Fig. 9, may be obtained by means of a first assembly 6, hereinafter referred to as abutting assembly 6, comprising at least one stop container body 30.b, a clamping ring nut 11.b, an optional washer 13, and a second assembly 7, hereinafter defined as yielding assembly 7, comprising at least one sliding container body 30.a, a sliding ring nut 11.a, the elastically yielding body 12, said first 6 and second 7 assembly being suitably arranged along said shank 10.

To facilitate the assembly and installation phase, it is possible to pre-couple the various parts that make up the elastic coupling and said abutment assembly 6 and yielding assembly 7.

The elastic coupling may be pre-mounted by placing the sliding elements 120 on the sliding ring nut 11.a, in particular on the guide and sliding surface 112, and then locking the parts by positioning the elastic means 125 (Figs. 6a, 6b, 6c). Said elastic means 125, once inserted in the grooves 121 provided by said sliding elements 120, are sufficiently tensioned and elongated so as to provide an elastic force capable of retaining and maintaining the parts in position and guaranteeing the mounting thereof, i.e., said elastic force is such as to ensure the assembly of the parts and not allow a reciprocal sliding of the same.

To make and pre-mount the yielding assembly 7 the coupling and locking of said sliding ring nut 11.a, provided with the elastic coupling, and of said container body 30.a is carried out by the respective recesses 111 and convex portions 321.

In accordance with a preferred variant, there is provided the use of a washer 13, previously inserted in the container body 30, 30.a, 30.b and arranged on the base 31, adapted to increase the adherence and grip between said base 31 and said sliding elements 120.

Said washer 13, therefore, facilitates the transmission of the axial stress between the various components of the yielding coupling, contributing to strongly convert said axial stress Fp into radial stress Fr.

To make and pre-mount the abutment assembly 6 the coupling and locking of said clamping ring nut 11.b, devoid of the elastic coupling, and said container body 30.b, is carried out by means of the respective recesses 111 and convex portions 321 (Figs. 8a, 8b, 8c).

Substantially, the abutment assembly 6 provides for joining only the clamping ring nut 11.b with only the stop container body 30.b, possibly providing for the previous insertion of a washer 13 in the stop container body 30.b and arranged on the base 31, adapted to increase adherence and grip between said base 31 and said clamping ring nut 11.b.

To facilitate the assembly and installation step it is possible to pre-couple, when necessary, the central bush 20, possibly already coupled with the eccentric bush 21, to the container body 30, 30.a, 30.b of said the abutment assembly 6 or yielding assembly 7.

Such pre-mounted assemblies, which can be made previously, facilitate and speed up the installation operations of the panelling, since the operator must provide for inserting, arranging and screwing such assemblies along the shank 10.

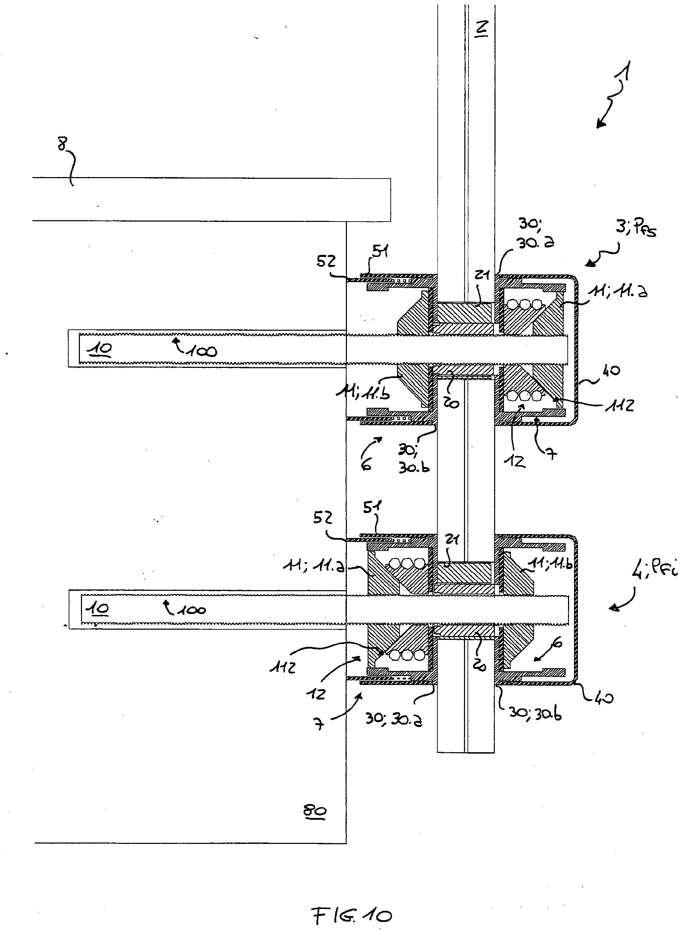

With reference to Figs. 9, 10 and 11, the possible mounting steps and the operation of the system according to the present invention are now described.

By way of an example, the mounting of the boss 3 described above, may proceed as follows:
- insertion on the shank 10 of the second tubular element 52, of the helical spring 53 and of the first tubular element 51;
- insertion and screwing on the shank 10 of the abutment assembly 6, the screwing being facilitated by the holes 202 of the central bush 20 or by the holes 211 of the eccentric bush 21;
- adjustment of the distance from the shoulder 80 of the second tubular element 52 by screwing said abutment assembly 6 along said shank 10, the screwing facilitated by the holes 202 of the central bush 20 or by the holes 211 of the eccentric bush 21;
- positioning and insertion of the panel 2, by means of the through hole 220 provided on said panel 2, on the eccentric bush 21;
- insertion and screwing on the shank 10 of said yielding assembly 7, the screwing being carried out by means of said sliding ring nut 11.a or said container body 30.a;
- locking of the panel 2 by means of the tightening of the said yielding assembly 7 along said shank 10, i.e., said panel 2 is constrained and tightened between said abutment assembly 6 and yielding assembly 7;
- mounting of the housing 40 on the container body 30.a.

By way of an example, the mounting of the boss 4 described above, may proceed as follows:
- insertion on the shank 10 of the second tubular element 52, of the helical spring 53 and of the first tubular element 51;
- insertion and screwing on the shank 10 of said yielding assembly 7, possibly coupled to the central 20 and eccentric 21 bushes, the screwing being carried out by means of said sliding ring nut 11.b or said container body 30.a or the holes 202 of the central bush 20 or the holes 211 of the eccentric bush 21;
- adjustment of the distance from the shoulder 80 of the second tubular element 52 by screwing said abutment assembly 6 along said shank 10, the screwing facilitated by the holes 202 of the central bush 20 or by the holes 211 of the eccentric bush 21;
- positioning and insertion of the panel 2, by means of the through hole 220 provided on said panel 2, on the eccentric bush 21;
- insertion and screwing on the shank 10 of the abutment assembly 6, the screwing being performed by means of said clamping ring nut 11.b or said container body 30.b;
- locking of the panel 2 by tightening of the said abutment assembly 6 along the said shank 10, i.e. the said panel 2 is constrained and tightened between said abutment assembly 6 and yielding assembly 7;
- mounting of the housing 40 on the container body 30.b.

Such coupling of the parts allows the operator to work safely and comfortably as he/she has reference and anchoring points (shank 10 and/or eccentric bush 21) available for positioning the panel 2 even before its final fixing.

The panel 2, in fact, once inserted on the eccentric bush 21, does not weigh with its entire weight on the operator.

According to the invention it is preferably provided that each of said panels 2 is secured to the shoulder 80 by means of one or more upper constraints Pfs aligned along an upper line or array and one or more lower constraints Pfi aligned along a lower line or array.

Preferably each panel 2 provides at least two lower fixing constraints Pfi and as many upper ones Pfs.

Preferably the fixing system 1 according to the invention provides that one or more of said upper constraints Pfs consists of one of the said bosses 3 and/or that one or more of said lower constraints Pfi consists of one of said bosses 4.

In essence, the bosses 3 and 4 differ from each other in the arrangement of the components, i.e.:
- the boss 3, used here as a upper constraining point Pfs, involves arranging the abutment assembly 6 among the shoulder 80 and the panel 2 and the yielding assembly 7 on the outer side of the panel 2;
- the boss 4, used here as the lower constraining point Pfi, involves arranging the yielding assembly 7 among the shoulder 80 and the panel 2 and the abutment assembly 6 on the outer side of the panel 2.

Such arrangement of the components of the respective bosses 3 and 4 allows the panel to yield and move under the action of a load F.

Of course, nothing prevents the provision of different or alternative arrangements of the components, as long as they fall within the wording of the appended claims, so as to adapt the bosses to different situations that provide, for example, a direction of the loads different from the one illustrated here.

The impacts that the panels 2 may undergo, at least if these form a balustrade or similar type of barrier, exert a force thereon, the component F whereof, orthogonal to them, is directed from the structure 8 towards the same panels 2.

Since this force F is eccentric with respect to the said fixing points Pfs and Pfi, two forces, pulling Ft and pressing Fp, respectively, create thereon as well as a torque C.

According to the invention, each upper constraint Pfs is such as to yield elastically to a pulling force Ft in as well as to a torque C and likewise each lower constraint Pfi is such as to yield elastically to a pressing force Fp as well as to the same torque C, the barrier consisting of panels 2 may yield elastically to said impacts of force F.

When a force F hits the panel 2, said panel rotates with respect to the constraining point provided by the bosses 3 and 4 and presses axially (longitudinally) on the respective container bodies 30.a which enclose the relative elastic couplings.

This axial (longitudinal) thrust, by means of the base 31 of said container body 30.a and possibly said washer 13, transfers to the sliding elements 120 that begin to slide along the guide and sliding surface 112 of the sliding ring nut 11.a.

Said sliding ring nut 11.a, being screwed and constrained on the shank 10, cannot move and is therefore able to provide a stable and fixed surface for the sliding of said sliding elements 120.

In order to be able to move, said sliding elements 120 must be able to oppose the elastic force exerted by the elastic means 125, said elastic force being won by said axial force that deforms the said elastic coupling.

As anticipated, therefore, said elastic coupling is capable of transforming and converting the axial (longitudinal) stress generated by said pulling Ft or pressing Fp force to a radial (transverse) stress Fr, said radial (transverse) stress Fr being absorbed and cushioned by the elastic deformation of said elastic means 125 and by the sliding of said sliding elements 120 along said guide surface 112.

Preferably, by appropriately choosing the elastic rigidity of the elastically yielding body 12 and/or of the elastic means 125, depending on the applied forces Fa and predictable torques C and the clearance provided between the eccentric bush 21 and the through holes 220 of the panel 2, the boss 3, 4 may rotate, up to an angle α of 10° (where α is the angle comprised between the lying plane of the shoulder 80 and the lying plane of said panel 2).

Such bosses 3 and 4, besides yielding elastically, also support the elastic recovery of the panel with a rotation direction opposite to the previous one by an angle β < α and so on until the cushioning of the oscillations.

Nothing prevents, although not shown in the figures, that the fixing system 1 further provides, for example at the height of the upper constraints Pfs, with the cushioning means for dissipating the impact energy transmitted by the force F. Even more advantageously, such cushioning function may be integrated in the same upper and/or lower constraints Pfs, Pfi and even more advantageously, the same bosses 3, 4 may integrate means providing a cushioning function.

Furthermore, the same elastic means 125 may consist of a material having a gradual and slowed-down elastic recovery, and therefore able to offer a cushioning effect to the boss 3, 4.

This feature, besides the transformation of the stress from axial to radial, allows reducing the longitudinal dimensions of the boss 3, 4 according to the present invention.

The boss according to the present invention provides small longitudinal dimensions since the means that absorb and oppose the mechanical stress do not work along the longitudinal axis of said boss, but operate radially by means of said transformation of the stress.

The cushioning function obviously means the ability of well-known mechanical members to easily support a movement imparted to an element and then allow, but more slowly, returning to the initial position by dissipating wholly or partly the elastic energy that has been absorbed.

Finally, of course the elastic stiffness of the elastically yielding body 12 and/or of the elastic means 125 of which the bosses 3 and 4 are provided must be sufficiently high to allow the panels 2 and the fixing system 1 not to yield substantially, with the appropriate safety margin, to forces that are within normality.

## Claims

1. Elastic boss (3; 4) for the elastic fixing of one or more panels (2) to a shoulder (80) of a support structure (8), in particular for the installation and the elastically yielding support of balustrades, parapets, barriers or similar architectural elements of any material and shape, said boss suitable for being anchored to said shoulder (80) by a shank (10) intended to be irremovably fixed to said structure (8);
wherein it comprises an elastically yielding body (12) comprising:
- at least one sliding element (120) whereon said panel (2) can press;
- at least one sliding surface (112), whereon said sliding element (120) is capable of sliding, irremovably constrained to said shank (10) and intended to be inclined with respect to the lying plane of the panel (2) at rest by an angle φ such as to allow the retrograde motion of the sliding element (120) sliding on the sliding surface (112);
- elastic opposing means (125), positioned and constrained so as to be able to exert an elastic force (Fe) that insists on said sliding element (120) so as to press it on said sliding surface (112);
said elastically yielding body (12), by means of said sliding element (120), sliding surface (112) and elastic opposing means (125), being capable of opposing yields caused by a load F substantially orthogonal to the lying plane of the panel (2) with an elastic reaction force (Fe) substantially parallel to the lying plane of the said panel (2).

2. Elastic boss (3; 4) according to the previous claim, wherein said elastic opposing means (125) consists of a material that has a gradual and slowed-down spring-back, able to offer a cushioning effect to said boss (3; 4).

3. Elastic boss (3; 4) according to the previous claim 1 or 2, wherein
- said elastic opposing means (125) comprises O-rings, elastic seals or the like;
- said at least one sliding element (120) is provided with one or more grooves (121) adapted to seat said elastic opposing means (125), and at least one gliding surface (122) able to move along said sliding surface (112).

4. Elastic boss (3; 4) according to any one of the previous claims, wherein said sliding surface (112) is defined by at least one sliding ring nut (11.a), screwable along said shank (10), integrally or partially provided with said sliding surface (112) and an abutment surface (113) which acts as an end stop for the sliding of said sliding element (120).

5. Elastic boss (3; 4) according to any one of the previous claims, wherein said elastic boss (3; 4) further comprises:
- at least one sliding container body (30.a), within which at least said elastically yielding body (12) is housed;
- at least one stop container body (30.b) within which at least one clamping ring nut (11.b) can be housed, screwable along said shank (10), which acts as an abutment and stop for locking said panel (2).

6. Elastic boss (3; 4) according to the previous claims, wherein said elastic boss (3; 4) comprises a central bush (20) provided with a through hole (201) for the passage of said shank (10) and suitable coupling/jointing means (200), being installable in a hole (220) made on said panel (2).

7. Elastic boss (3; 4) according to the previous claims from 5 onwards, wherein said elastic boss (3; 4) comprises a container body (30) that can be used as a sliding container body (30.a) and/or as a stop container body (30.b).

8. Elastic boss (3; 4) according to the previous claim, wherein said container body (30) is defined by a base wall (31) wherefrom a plurality of projections (32) develops and extends adapted to define a cavity that seats said elastically yielding body (12), in the case of the sliding container body (30.a), or said clamping ring nut (11.b), in the case of the stop container body (30.b), each of said projections (32) being arranged in proximity of the outer perimeter of said base wall (31), each of said projections (32) being:
- internally provided with a prominence (321);
- provided with a hole (311) suitably shaped in order to releasably couple with the coupling/jointing means (200) arranged on said central bush (20).

9. Elastic boss (3; 4) according to the previous claim, wherein each of said projections (32) being also externally provided:
- integrally or partially, with a threaded portion (320);
- integrally or partially, with a shoulder (322).

10. Elastic boss (3; 4) according to the previous claims, wherein said elastic boss (3; 4) comprises a component (11) that can be used as a sliding ring nut (11.a) and/or as a clamping ring nut (11.b).

11. Elastic boss (3; 4) according to the previous claim, wherein said component (11) is provided with a threaded through hole (110) and a plurality of recesses (111) adapted to couple with the respective prominence (321) of the projections (32) of the said container body (30; 30.a; 30.b).

12. Elastic boss (3; 4) according to the previous claim, wherein said coupling (111-321) between said plurality of recesses (111) and the respective prominences (321), allows, by acting on said container body (30; 30.a; 30.b), screwing/unscrewing said sliding ring nut (11.a) and/or said stop ring nut (11.b) along said shank (10).

13. Fixing system (1) of one or more panels (2) to a shoulder (80) of a support structure (8), wherein the combined use of at least two bosses (3; 4), suitably arranged to each other is provided, according to one or more of the previous claims 1 to 12.

14. Fixing system (1) according to the previous claim, wherein said at least two bosses (3; 4) are arranged one above the other.

15. Fixing system (1) according to the previous claim, wherein said system provides at least a first array of upper bosses (3) and at least a second array of lower bosses (4).

## Patentansprüche

1. Elastischer Buckel (3; 4) für die elastische Befestigung einer oder mehrerer Platten (2) an einer Schulter (80) einer Trägerstruktur (8), insbesondere für die Installation und die elastisch nachgebende Abstützung von Geländern, Brüstungen, Barrieren oder ähnlichen architektonischen Elementen aus beliebigem Material und beliebiger Form, wobei der Buckel geeignet ist, an der Schulter (80) durch einen Schaft (10) verankert zu werden, der dazu bestimmt ist, unabnehmbar an der Struktur (8) fixiert zu werden;
wobei er einen elastisch nachgebenden Körper (12) umfasst, umfassend:
- mindestens ein Gleitelement (120), auf das die Platte (2) drücken kann;
- mindestens eine Gleitfläche (112), auf der das Gleitelement (120) in der Lage ist, zu gleiten, die unabnehmbar an dem Schaft (10) befestigt ist und dazu bestimmt ist, in Bezug auf die Liegeebene der Platte (2) im Ruhezustand um einen Winkel φ geneigt zu sein, um die Rückwärtsbewegung des Gleitelements (120), das auf der Gleitfläche (112) gleitet, zu ermöglichen;
- ein elastisches Gegenmittel (125), das positioniert und befestigt ist, um fähig zu sein, eine elastische Kraft (Fe) auszuüben, die auf das Gleitelement (120) wirkt, um es auf die Gleitfläche (112) zu drücken;
wobei der elastisch nachgebende Körper (12) durch das Gleitelement (120), die Gleitfläche (112) und das elastische Gegenmittel (125) in der Lage ist, den Nachgiebigkeiten, die durch eine Last F verursacht werden, die im Wesentlichen orthogonal zu der Liegeebene der Platte (2) ist, mit einer elastischen Reaktionskraft (Fe) entgegenzuwirken, die im Wesentlichen parallel zu der Liegeebene der Platte (2) ist.

2. Elastischer Buckel (3; 4) nach dem vorhergehenden Anspruch, wobei das elastische Gegenmittel (125) aus einem Material besteht, das eine allmähliche und verlangsamte Rückfederung aufweist, die fähig ist, dem Buckel (3; 4) eine dämpfende Wirkung zu bieten.

3. Elastischer Buckel (3; 4) nach dem vorhergehenden Anspruch 1 oder 2, wobei
- das elastische Gegenmittel (125) O-Ringe, elastische Dichtungen oder dergleichen umfasst;
- das mindestens eine Gleitelement (120) mit einer oder mehreren Nuten (121), die geeignet sind, das elastische Gegenmittel (125) aufzunehmen, und mit mindestens einer Lauffläche (122) versehen ist, die sich entlang der Gleitfläche (112) bewegen kann.

4. Elastischer Buckel (3; 4) nach einem der vorhergehenden Ansprüche, wobei die Gleitfläche (112) durch mindestens eine Gleitringmutter (11.a) definiert ist, die entlang des Schafts (10) schraubbar ist, ganz oder teilweise mit der Gleitfläche (112) und einer Anschlagfläche (113) versehen ist, die als Endanschlag für das Gleiten des Gleitelements (120) dient.

5. Elastischer Buckel (3; 4) nach einem der vorhergehenden Ansprüche, wobei der elastische Buckel (3; 4) ferner umfasst:
- mindestens einen gleitenden Behälterkörper (30.a), in dem mindestens der elastisch nachgebende Körper (12) untergebracht ist;
- mindestens einen Anschlag-Behälterkörper (30.b), in dem mindestens eine Klemm-Ringmutter (11.b) untergebracht werden kann, die entlang des Schafts (10) schraubbar ist, die als ein Widerlager und Anschlag zum Verriegeln der Platte (2) fungiert.

6. Elastischer Buckel (3; 4) nach den vorhergehenden Ansprüchen, wobei der elastische Buckel (3; 4) eine zentrale Buchse (20) umfasst, die mit einem Durchgangsloch (201) für den Durchgang des Schaftes (10) und geeigneten Kopplungs-/Verbindungsmitteln (200) versehen ist, die in einem Loch (220) installierbar sind, das in der Platte (2) ausgebildet ist.

7. Elastischer Buckel (3; 4) nach den vorhergehenden Ansprüchen ab Anspruch 5, wobei der elastische Buckel (3; 4) einen Behälterkörper (30) umfasst, der als ein gleitender Behälterkörper (30.a) und/oder als ein Anschlag-Behälterkörper (30.b) verwendet werden kann.

8. Elastischer Buckel (3; 4) nach dem vorhergehenden Anspruch, wobei der Behälterkörper (30) durch eine Basiswand (31) definiert ist, von der aus sich mehrere Vorsprünge (32) entwickeln und erstrecken, die geeignet sind, einen Hohlraum zu definieren, in dem der elastisch nachgebende Körper (12) im Fall des gleitenden Behälterkörpers (30.a) oder die Klemm-Ringmutter (11.b) im Fall des Anschlag-Behälterkörpers (30.b) aufgenommen ist, wobei jeder der Vorsprünge (32) in der Nähe des Außenumfangs der Basiswand (31) angeordnet ist, wobei jeder der Vorsprünge (32):
- innen mit einer Erhebung (321) versehen ist;
- mit einem Loch (311) versehen ist, das geformt ist, um sich lösbar mit den Kopplungs-/Verbindungsmitteln (200) zu verbinden, die an der zentralen Buchse (20) angeordnet sind.

9. Elastischer Buckel (3; 4) nach dem vorhergehenden Anspruch, wobei jeder der Vorsprünge (32) auch außen:
- ganz oder teilweise mit einem Gewindeabschnitt (320) versehen ist;
- ganz oder teilweise mit einer Schulter (322) versehen ist.

10. Elastischer Buckel (3; 4) nach den vorhergehenden Ansprüchen, wobei der elastische Buckel (3; 4) ein Bauteil (11) umfasst, das als Gleitringmutter (11.a) und/oder als Klemm-Ringmutter (11.b) verwendet werden kann.

11. Elastischer Buckel (3; 4) nach dem vorhergehenden Anspruch, wobei das Bauteil (11) mit einem Durchgangsgewindeloch (110) und mehreren Ausnehmungen (111) versehen ist, die geeignet sind, mit den jeweiligen Erhebungen (321) der Vorsprünge (32) des Behälterkörpers (30; 30.a; 30.b) gekoppelt zu werden.

12. Elastischer Buckel (3; 4) nach dem vorhergehenden Anspruch, wobei die Kopplung (111-321) zwischen den mehreren Aussparungen (111) und den jeweiligen Erhebungen (321) durch Einwirken auf den Behälterkörper (30; 30.a; 30.b) das An-/Abschrauben der Gleitringmutter (11.a) und/oder der Anschlagringmutter (11.b) entlang des Schafts (10) ermöglicht.

13. Befestigungssystem (1) für eine oder mehrere Platten (2) an einer Schulter (80) einer Trägerstruktur (8), wobei die kombinierte Verwendung von mindestens zwei Buckeln (3; 4), die geeignet zueinander angeordnet sind, nach einem oder mehreren der vorhergehenden Ansprüche 1 bis 12 vorgesehen ist.

14. Befestigungssystem (1) nach dem vorhergehenden Anspruch, wobei die mindestens zwei Buckel (3; 4) übereinander angeordnet sind.

15. Befestigungssystem (1) nach dem vorhergehenden Anspruch, wobei das System mindestens eine erste Anordnung von oberen Buckeln (3) und mindestens eine zweite Anordnung von unteren Buckeln (4) aufweist.

## Revendications

1. Bossage élastique (3 ; 4) pour la fixation élastique d'un ou plusieurs panneaux (2) à un épaulement (80) d'une structure de support (8), en particulier pour l'installation et le support à élasticité de balustrades, parapets, barrières ou éléments architecturaux similaires de tout matériau et de toute forme, ledit bossage étant apte à être ancré audit épaulement (80) par une tige (10) destinée à être fixée de façon inamovible à ladite structure (8) ;
dans lequel il comprend un corps élastique (12) comprenant :
- au moins un élément coulissant (120) sur lequel ledit panneau (2) peut appuyer ;
- au moins une surface de glissement (112), sur laquelle ledit élément coulissant (120) est capable de glisser, contrainte de manière inamovible à ladite tige (10) et destinée à être inclinée par rapport au plan de pose du panneau (2) au repos d'un angle φ tel qu'il permette le mouvement rétrograde de l'élément coulissant (120) glissant sur la surface de glissement (112) ;
- des moyens élastiques opposés (125), positionnés et contraints de manière à pouvoir exercer une force élastique (Fe) qui insiste sur ledit élément coulissant (120) de manière à le presser sur ladite surface de glissement (112) ;
ledit corps élastique (12), par l'intermédiaire de l'élément coulissant (120), de la surface de glissement (112) et des moyens élastiques d'opposition (125), est capable d'opposer aux déformations provoquées par une charge F sensiblement orthogonale au plan de pose du panneau (2) une force de réaction élastique (Fe) sensiblement parallèle au plan de pose dudit panneau (2).

2. Bossage élastique (3 ; 4) selon la revendication précédente, dans lequel ledit moyen d'opposition élastique (125) est constitué d'un matériau qui a un retour élastique graduel et ralenti, capable d'offrir un effet d'amortissement audit bossage (3 ; 4).

3. Bossage élastique (3 ; 4) selon la revendication précédente 1 ou 2, dans lequel
- lesdits moyens d'opposition élastiques (125) comprennent des joints toriques, des joints élastiques ou similaires ;
- ledit au moins un élément coulissant (120) est pourvu d'une ou plusieurs rainures (121) adaptées pour accueillir lesdits moyens d'opposition élastiques (125), et d'au moins une surface de glissement (122) capable de se déplacer le long de ladite surface de glissement (112).

4. Bossage élastique (3 ; 4) selon l'une quelconque des revendications précédentes, dans lequel ladite surface de glissement (112) est définie par au moins un écrou à bague coulissante (11.a), vissable le long de ladite tige (10), intégralement ou partiellement pourvu de ladite surface de glissement (112) et d'une surface de butée (113) qui agit comme une butée de fin de course pour le glissement dudit élément coulissant (120).

5. Bossage élastique (3 ; 4) selon l'une quelconque des revendications précédentes, dans lequel ledit bossage élastique (3 ; 4) comprend en outre :
- au moins un corps de récipient coulissant (30.a), à l'intérieur duquel est logé au moins ledit corps élastique (12) ;
- au moins un corps de récipient de butée (30.b) à l'intérieur duquel peut être logé au moins un écrou à bague de serrage (11.b), vissable le long de ladite tige (10), qui sert de butée et d'arrêt pour le verrouillage dudit panneau (2).

6. Bossage élastique (3 ; 4) selon les revendications précédentes, dans lequel ledit bossage élastique (3 ; 4) comprend une douille centrale (20) pourvue d'un trou traversant (201) pour le passage de ladite tige (10) et de moyens d'accouplement/jonction appropriés (200), pouvant être installés dans un trou (220) pratiqué sur ledit panneau (2).

7. Bossage élastique (3 ; 4) selon les revendications précédentes à partir de 5, dans lequel ledit bossage élastique (3 ; 4) comprend un corps de récipient (30) qui peut être utilisé comme corps de récipient coulissant (30.a) et/ou comme corps de récipient d'arrêt (30.b).

8. Bossage élastique (3 ; 4) selon la revendication précédente, dans lequel ledit corps de récipient (30) est défini par une paroi de base (31) à partir de laquelle se développe et s'étend une pluralité de saillies (32) adaptées pour définir une cavité qui accueille ledit corps élastique (12), dans le cas du corps de récipient coulissant (30.a), ou ledit écrou à anneau de serrage (11.b), dans le cas du corps de récipient d'arrêt (30.b), chacune desdites saillies (32) étant disposée à proximité du périmètre extérieur de ladite paroi de base (31), chacune desdites saillies (32) étant :
- en interne avec une proéminence (321) ;
- pourvue d'un trou (311) de forme appropriée pour s'accoupler de manière amovible avec le moyen d'accouplement/jonction (200) disposé sur ladite douille centrale (20).

9. Bossage élastique (3 ; 4) selon la revendication précédente, dans lequel chacune de ces saillies (32) est également prévue extérieurement :
- intégralement ou partiellement, avec une partie filetée (320) ;
- intégralement ou partiellement, avec un épaulement (322).

10. Bossage élastique (3 ; 4) selon les revendications précédentes, dans lequel ledit bossage élastique (3 ; 4) comprend un composant (11) qui peut être utilisé comme écrou à bague coulissante (11.a) et/ou comme écrou à anneau de serrage (11.b).

11. Bossage élastique (3 ; 4) selon la revendication précédente, dans lequel ledit composant (11) est pourvu d'un trou de passage fileté (110) et d'une pluralité d'évidements (111) adaptés pour s'accoupler avec la proéminence respective (321) des saillies (32) dudit corps de récipient (30 ; 30.a ; 30.b).

12. Bossage élastique (3 ; 4) selon la revendication précédente, dans lequel ledit couplage (111-321) entre ladite pluralité d'évidements (111) et les proéminences (321) respectives, permet, en agissant sur ledit corps de récipient (30 ; 30.a ; 30.b), de visser/dévisser ledit écrou à bague coulissante (11.a) et/ou ledit écrou à bague d'arrêt (11.b) le long de ladite tige (10).

13. Système de fixation (1) d'un ou plusieurs panneaux (2) à un épaulement (80) d'une structure de support (8), dans lequel l'utilisation combinée d'au moins deux bossages (3 ; 4), convenablement disposés l'un par rapport à l'autre, est prévue, selon une ou plusieurs des revendications précédentes 1 à 12.

14. Système de fixation (1) selon la revendication précédente, dans lequel lesdits au moins deux bossages (3 ; 4) sont disposés l'un au-dessus de l'autre.

15. Système de fixation (1) selon la revendication précédente, dans lequel ledit système comporte au moins une première rangée de bossages supérieurs (3) et au moins une deuxième rangée de bossages inférieurs (4).
